# EUROPÄISCHE PATENTANMELDUNG

(11) **EP 4 613 357 A1**
(43) Veröffentlichungstag der Anmeldung: **10.09.2025**
(21) Anmeldenummer: 25161971.4
(22) Anmeldetag: 05.03.2025
(51) Int. Cl.: B01D 53/04, B01D 59/26, C01B 23/00

(54) **VERFAHREN ZUR ABTRENNUNG, ANREICHERUNG UND GEWINNUNG DES ISOTOPS 3HE GEGENÜBER DEM ISOTOP 4HE UND VERWENDUNG DES ABGETRENNTEN, ANGEREICHERTEN UND GEWONNENEN 3HE**

(30) Priorität: 07.03.2024 DE 102024106605
(71) Anmelder: GFZ Helmholtz-Zentrum für Geoforschung Stiftung des öff. Rechts Land Brandenburg, 14473 Potsdam (DE)
(72) Erfinder: Zimmer, Martin, 14548 Schwielowsee (DE); Strauch, Bettina, 14558 Nuthetal (DE); Niedermann, Samuel, 14548 Schwielowsee (DE)
(74) Vertreter: Adares PartGmbB

(57) **Zusammenfassung**

Die Erfindung betrifft ein Verfahren zur Abtrennung, Anreicherung und Gewinnung des Isotops ³He gegenüber dem Isotop ⁴He, aufweisend folgende Schritte:
a) Durchführen einer Adsorption eines ³He/⁴He-haltigen Gases an ein Adsorptionsmittel, und
b) Durchführen einer selektiven Desorption, so dass ³He von dem Adsorptionsmittel freigesetzt wird.

Ferner betrifft die Erfindung eine Verwendung des mittels des Verfahrens erhaltenen abgetrennten, angereicherten und gewonnenen Isotops ³He zur Erzeugung von einer Temperatur im Bereich von 0,01 bis 0,05 K, bevorzugt von 0,02 K, oder als Kontrastmittel für kernspintomografische Aufnahmen.

## Beschreibung

Die Erfindung betrifft ein Verfahren zur Abtrennung, Anreicherung und Gewinnung des Isotops ³He gegenüber dem Isotop ⁴He und eine Verwendung des abgetrennten, angereicherten und gewonnenen ³He.

Helium ist ein farbloses, geruchloses und ungiftiges Edelgas, das auch bei tiefen Temperaturen gasförmig bleibt und erst nahe dem absoluten Nullpunkt flüssig wird. Helium wird bei Normaldruck am absoluten Nullpunkt bei 0 K nicht fest. Weiterhin ist Helium sehr reaktionsträge, so dass es im Wesentlichen nur atomar vorkommt. Helium weist mehrere Isotope auf, von denen zwei stabil sind. Das häufigste stabile Isotop ist ⁴He. Ein weiteres stabiles Isotop ist ³He, das allerdings relativ selten natürlich vorkommt. ³He und ⁴He weisen unterschiedliche physikalische Eigenschaften auf. Daher sind die beiden Isotope unterschiedlich nutzbar.

Neben ⁴He kommt das leichtere stabile ³He primordial auf der Erde vor, ist im Erdmantel angereichert und kommt insbesondere durch Hot-Spot-Vulkanismus an die Erdoberfläche. Anthropogenes ³He stammt aus dem Tritium-Zerfall, vornehmlich aus Kernreaktoren und Kernwaffen. Gegenwärtig werden jährlich nur etwa 15 Kilogramm ³He gewonnen, hauptsächlich als Beiprodukt bei der Aufarbeitung von Kernwaffen. Zudem ist interplanetarer Staub und Regolith des Mondes durch Beschuss mit Sonnenwind und Spallationsreaktionen der kosmischen Strahlung mit nichtflüchtigen Teilchen ³He-angereichert.

In der Erdatmosphäre existieren mehr ⁴He-Atome als ³He-Atome. Jedoch variiert das Verhältnis der beiden Isotope in Abhängigkeit ihres Herkunftsorts.

S. Niedermann et al. beschreiben in Geochimica et Cosmochimica Acta. Vol. 61. No. 13, pp. 2697-2715., 1997 ein Verfahren zum Bestimmen von Isotopen-Zusammensetzungen von Edelgasen u.a. in Basalt-Gläsern, wobei die Isotopen-Zusammensetzungen der Edelgase mittels eines Massenspektrometers ermittelt werden.

Der Verbrauch an ³He ist steigend, daher besteht weiterhin ein Bedarf, ³He von ⁴He abzutrennen, anzureichern und zu gewinnen.

Es ist eine Aufgabe der Erfindung, ein Verfahren zur Abtrennung, Anreicherung und Gewinnung des Isotops ³He bereitzustellen. und das abgetrennte, angereicherte und gewonnene ³He zu nutzen.

Diese Aufgabe wird durch ein Verfahren mit den Merkmalen des Patentanspruchs 1 und eine Verwendung mit den Merkmalen des Patentanspruchs 12 gelöst. Vorteilhafte Weiterbildungen und Modifikationen sind in den Unteransprüchen genannt.

Die Erfindung betrifft ein Verfahren zur Abtrennung, Anreicherung und Gewinnung des Isotops ³He gegenüber dem Isotop ⁴He, aufweisend folgende Schritte:
a) Durchführen einer Adsorption eines ³He/⁴He-haltigen Gases an ein Adsorptionsmittel, und
b) Durchführen einer selektiven Desorption, so dass ³He von dem Adsorptionsmittel freigesetzt wird.

Das erfindungsgemäße Verfahren zur Abtrennung, Anreicherung und Gewinnung beinhaltet ein Verfahren zur Isotopentrennung der Isotope ³He und ⁴He. Unter dem Ausdruck "³He/⁴He-haltiges Gas" ist ein Gas zu verstehen, das ³He und ⁴He enthält. Bevorzugt weist das ³He/⁴He-haltige Gas neben ³He und ⁴He außer Ne (Neon) keine anderen Fremdgase auf.

Bevorzugt wird in dem Schritt a) ein natürlich vorkommendes Gas, das ³He und ⁴He enthält, als das ³He/⁴He-haltige Gas eingesetzt. Da natürlich vorkommende, ³He/⁴He-haltige Gase immer Fremdgase enthalten, wird das natürliche Gas bevorzugt vor der Durchführung des Schritts a) von den Fremdgasen befreit. Aus einem druckschriftlich nicht belegten Stand der Technik ist bekannt, störende Fremdgase aus dem natürlichen Gas, das als Gasgemisch vorliegt, zu entfernen, sodass He in hoher Reinheit vorliegt. Das natürliche Gasgemisch kann jedwedes natürliche Gas sein, das Helium enthält. Z.B. kann das natürliche Gas Erdgas oder Luft sein. Bevorzugt hat das natürliche Gas schon initial einen erhöhten Heliumgehalt. Dies kann vulkanisches Gas, bevorzugter ein Hot-Spot-vulkanisches Gas sein oder auch Erdgas in einigen Regionen. Ein vulkanisches Gas weist üblicherweise einen höheren Gehalt an Helium auf als Luft.

Fremdgase wie Wasserdampf, N₂ (Stickstoff), O₂ (Sauerstoff), H₂ (Wasserstoff), CO₂ (Kohlendioxid), Kohlenwasserstoffe, Ar (Argon), Kr (Krypton) und Xe (Xenon) können z.B. auf folgende Weise aus dem natürlichen Gas entfernt werden: Wasserdampf kann durch Ausfrieren an einem Bauteil wie einer Rohrschleife entfernt werden, die mit einem geeigneten Kältemittel wie flüssigen Stickstoff oder Trockeneis auf eine vorbestimmte Temperatur gekühlt wird. N₂ und O₂ können zur Entfernung jeweils an einem mit Titan z.B. in Form von Schwämmen, Spänen bestückten Getter bei 400° C absorbiert werden. H₂ kann zur Entfernung aus dem natürlichen Gas an einem mit Zr-Al-Legierung bestückten Getter bei Raumtemperatur absorbiert werden. CO₂ und Kohlenwasserstoffe können zur Entfernung an einem mit Zr-Al-Legierung bestückten Getter bei 400° C absorbiert werden. Um Ar, Kr, Xe aus dem natürlichen Gas zu entfernen, können diese z.B. in einem Adsorptionskryostat an einer auf z.B. 50 K gekühlten Stahlfritte oder an einer mit einem geeigneten Kältemittel wie flüssigem N₂ gekühlten und mit Aktivkohle gefüllten Adsorptionsfalle adsorbiert werden.

In einer bevorzugten Ausführungsform weist der Schritt a) ein Durchführen der Adsorption mit Aktivkohle als dem Adsorptionsmittel bei einer Temperatur im Bereich von 5 K bis 12 K, bevorzugt im Bereich von 7 K bis 11 K, bevorzugter bei einer Temperatur von 11 K auf. Der Schritt a) wird z.B. in einem mit Aktivkohle belegten Kryostaten ausgeführt.

Bevorzugt wird der Schritt a) derart durchgeführt, dass keine gasförmige Phase zurückbleibt. Dadurch werden Verluste in diesem Schritt vermieden.

In einer bevorzugten Ausführungsform weist der Schritt b) ein stufenweises Aufheizen des Adsorptionsmittels von einer Temperatur im Bereich von 5 K bis 12 K, bevorzugter 7 K bis 11 K, bevorzugter 11 K, zu einer weiteren Temperatur im Bereich von 13 K bis 40 K auf. Bevorzugt liegt die weitere Temperatur im Bereich von 15 K bis 25 K, bevorzugter 18 K bis 21 K. In dem Schritt b) findet die Isotopentrennung und Anreicherung von ³He gegenüber ⁴He statt. Die Isotope ³He und ⁴He werden entsprechend spezifischer Desorptionstemperaturen freigesetzt. Da die für die Adsorption verantwortlichen Van-der-Waals-Kräfte bei ³He vergleichsweise schwächer sind als bei ⁴He, desorbiert es schon bei niedrigeren Temperaturen, wogegen ⁴He erst bei höheren Temperaturen freigesetzt wird. Durch diesen physikochemischen Unterschied lässt sich ³He gegenüber ⁴He in der zuerst freigesetzten Gasphase anreichern. Bevorzugt weist das stufenweise Aufheizen ein Aufheizen in 2 K- bis 8 K-Schritten, bevorzugter 3 K- bis 7 K-Schritten, noch bevorzugter 4 K- bis 6 K-Schritten auf. Durch eine kontinuierliche Messung der He-lsotopenverhältnisse können optimale Helium-Fraktionierungsbedingungen und Temperaturen in Abhängigkeit des eingesetzten ³He/⁴He-haltigen Gases ermittelt werden. Die ³He-angereicherte Gasfraktion wird bevorzugt entsprechend einem Schritt c) in ein abgetrenntes Reservoir überführt und somit vom restlichen System abgetrennt, sodass es in der Folge, bei weiterer Temperaturerhöhung, nicht zu einer erneuten Vermischung mit Gas mit niedrigerer ³He-Konzentration kommt.

Alternativ bevorzugt weist der Schritt a) in einer weiteren Variante ein Ionisieren und Einschießen des ³He/⁴He-haltigen Gases in einen Ionengetter als das Adsorptionsmittel bei einer Temperatur im Bereich 280 K bis 315 K, bevorzugt 285 K bis 305 K, bevorzugter 290 K bis 295 K auf. Der Schritt a) wird bevorzugt der Einfachheit halber in der weiteren Variante bei Raumtemperatur durchgeführt.

Bevorzugt weist der Ionengetter ein Metall auf. Das Metall ist bevorzugt Barium, bevorzugter Titan.

In einer bevorzugten Ausführungsform weist der Schritt b) in der weiteren Variante ein stufenweises Aufheizen des Adsorptionsmittels von einer Temperatur bis zu einem Bereich von 500 K bis 700 K, bevorzugt 550 K bis 650 K, bevorzugter 575 K bis 625 K auf. Während des schritt- bzw. stufenweisen Aufheizens auf die vorstehend genannten Temperaturen werden die beiden Helium-Isotope ³He und ⁴He entsprechend der spezifischen Desorptionstemperaturen vom Ionengetter freigesetzt. Ohne an eine Theorie gebunden sein zu wollen, wird angenommen, dass ³He vergleichsweise weniger stark im Ionengetter adsorbiert ist und es schon bei niedrigeren Temperaturen desorbiert, wohingegen ⁴He erst bei höheren Temperaturen verstärkt freigesetzt wird. Durch die kontinuierliche Messung der He-lsotopenVerhältnisse können optimale Helium-Fraktionierungsbedingungen und Temperaturen in Abhängigkeit des eingesetzten ³He/⁴He-haltigen Gases ermittelt werden. Bevorzugt weist das stufenweise Aufheizen ein Aufheizen in 2 K- bis 8 K-Schritten, bevorzugter 3 K- bis 7 K-Schritten, noch bevorzugter 4 K-bis 6 K-Schritten auf. Die Gasfraktion mit bevorzugt hohem ³He/⁴He Verhältnis und bevorzugt großer Gasmenge wird bevorzugt entsprechend dem Schritt c) in ein abgetrenntes Reservoir überführt und somit vom restlichen System abgetrennt, sodass es im Folgenden nicht zu einer erneuten Vermischung mit Gas mit niedrigerer ³He-Konzentration kommt.

In einer bevorzugten Ausführungsform weist das Verfahren weiterhin den Schritt c) Überführen des in dem Schritt b) freigesetzten ³He in ein abgetrenntes Reservoir auf. Dabei wird eine mit ³He angereicherte Gasfraktion in das abgetrennt Reservoir überführt, die weiterhin auch ⁴He enthält. Der Schritt c) kann während und/oder im Anschluss an den Schritt b) ausgeführt werden. Bevorzugt wird der Schritt c) während des Schritts b) ausgeführt, um eine mit ³He angereicherte Gasfraktion zu fraktionieren, die ein hohes und/oder das höchste ³He/⁴He-Verhältnis aufweist und diese von Gasfraktionen mit niedrigerem ³He/⁴He-Verhältnis abzutrennen. Das abgetrennte Reservoir stellt ein Reservoir dar, das von einer Vorrichtung körperlich abgetrennt ist, in der der Schritt b) durchgeführt wird.

Bevorzugt werden die Schritte a) und b) und optional c) mehrfach wiederholt. Durch mehrmaliges Wiederholen der Verfahrensschritte lässt sich ³He gegenüber ⁴He immer weiter anreichern und gewinnen. Die mit ³He angereicherte Gasfraktion weist bevorzugt ein hohes und/oder höchstes ³He/⁴He-Verhältnis auf und die Schritte a), b) und optional c) werden bevorzugt wiederholt, bis eine vorbestimmte ³He-Konzentration erreicht wird.

In einer bevorzugten Ausführungsform weist das nach dem Schritt b) erhaltene ³He/⁴He-haltige Gasgemisch eine mindestens 1,2-fache, bevorzugter mindestens 1,5-fache Anreicherung an ³He gegenüber dem in dem Schritt a) eingesetzten ³He/⁴He-haltigen Gasgemisch auf.

Bevorzugt wird in dem Schritt b) das ³He/⁴He-Verhältnis in der Gasphase mittels eines Massenspektrometers kontinuierlich gemessen. Mittels der kontinuierlichen Messung der He-lsotopenverhältnisse können optimale Helium-Fraktionierungsbedingungen und Temperaturen in Abhängigkeit des eingesetzten ³He/⁴He-haltigen Gases ermittelt werden.

Ferner betrifft die Erfindung eine Verwendung des mittels des Verfahrens nach einer oder mehrerer der vorangehend beschriebenen Ausführungsformen erhaltenen abgetrennten, angereicherten und gewonnenen Isotops ³He zur Erzeugung einer Temperatur im Bereich von 0,01 bis 0,05 K, bevorzugt von 0,02 K, oder als Kontrastmittel für kernspintomografische Aufnahmen. Dadurch wird eine Verbesserung der ³He-Versorgung für Forschungslaboratorien und vor allem die Medizintechnik erzielt.

Das ³He wird bevorzugt in wissenschaftlichen Laboren zur Erzeugung extrem niedriger Millikelvin-Temperaturen wie z.B. 0,02 K durch Auflösen von flüssigem ³He in flüssigem ⁴He verwendet. Unter anderem dient es bevorzugt zur Kühlung von supraleitenden Magneten.

Hyperpolarisiertes ³He wird bevorzugt in der Diagnostik als Kontrastmittel für kernspintomografische Aufnahmen verwendet. Bei den medizinischen Bildgebungsverfahren wirkt hyperpolarisiertes ³He z.B. bildverbessernd bei der Bildgebung von Gehirn und Lunge.

Die Erfindung wird weiterhin nachstehend in Bezug auf Figuren und ein Beispiel weiterhin detaillierter erläutert. Sie zeigen schematisch und nicht maßstabsgerecht:
- Fig. 1: eine skizzierte Darstellung einer Anlage, in der ein Verfahren gemäß einer ersten Ausführungsform ausgeführt wird; und
- Fig. 2: eine skizzierte Darstellung einer weiteren Anlage, in der ein Verfahren gemäß einer zweiten Ausführungsform ausgeführt wird.

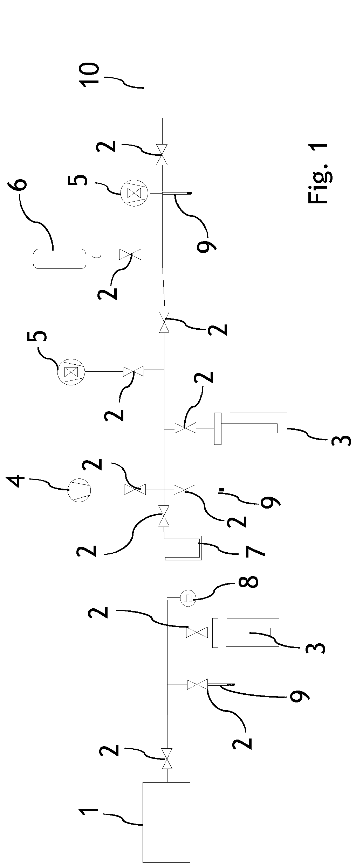

Fig. 1 zeigt eine skizzierte Darstellung einer Anlage, in der ein Verfahren gemäß einer ersten Ausführungsform ausgeführt wird. Dem Verfahren wird ein ³He/⁴He-haltiges Gas unterzogen, das ein natürliches Gas in Form eines Gasgemisches ist. Das natürliche Gas wird über einen Gaseinlass 1 der Anlage zugeführt, welche mehrere Ventile 2 zur Absperrung oder Steuerung eines Durchflusses des natürlichen Gases durch die Anlage aufweist. Optional weist die Anlage einen Pirani-Messzweig 8 zur Druckmessung von Grob- und/oder Feinvakuum auf. Weiterhin optional weist die Anlage Einrichtungen zum Entfernen von Fremdgasen aus dem ³He/⁴He-haltigen Gas auf, so dass ein Gemisch aus ³He/⁴He in hoher Reinheit dem erfindungsgemäßen Verfahren unterzogen wird, welches als Fremdgas nur Ne (Neon) aufweist. Zur Entfernung der Fremdgase mit Ausnahme des Ne sind Aktivkohle-Fallen 9, eine Kühlfalle 7, Getter 3 (z.B. Ti-Getter), SAES-Getter bzw. SAES-Pumpen 4 und weitere SAES-Getter bzw. SAES-Pumpen 5 vorgesehen, welche von SAES (Societä Apparecchi Elettrici e Scientifici, (Lainate, Italien) käuflich erwerblich sind, wobei die Fremdgase z.B. Wasserdampf, N₂ (Stickstoff), O₂ (Sauerstoff), H₂ (Wasserstoff), CO₂ (Kohlendioxid), Kohlenwasserstoffe, Ar (Argon), Kr (Krypton) und/oder Xe (Xenon) sein können. Das erfindungsgemäße Verfahren weist ein Durchführen einer Adsorption eines ³He/⁴He-haltigen Gases an einem Adsorptionsmittel auf und wird in einem mit Aktivkohle bestückten Kühlkopf 6 durchgeführt.

Die Aktivkohle ist das Adsorptionsmittel. Die Adsorption mit Aktivkohle als dem Adsorptionsmittel in dem mit Aktivkohle bestückten Kühlkopf 6 wird z.B. bei einer Temperatur von 11 K durchgeführt. Die Adsorption wird derart durchgeführt, dass keine gasförmige Phase zurückbleibt. Im Anschluss an die Adsorption wird eine selektive Desorption ausgeführt, so dass ³He von dem Adsorptionsmittel freigesetzt wird. Dadurch wird das ³He von dem ⁴He abgetrennt, angereichert und gewonnen. Die selektive Desorption erfolgt durch ein stufenweises Aufheizen des Adsorptionsmittels, d.h. der Aktivkohle, von der Temperatur von 11 K auf eine Temperatur von z.B. 20 K. Bei diesen Bedingungen bleibt Ne an dem Adsorptionsmittel adsorbiert. Mittels eines Massenspektrometers 10 kann das ³He/⁴He-Verhältnis kontinuierlich gemessen werden. Die freigesetzte ³He-angereicherte Gasfraktion wird in ein abgetrenntes Reservoir überführt. Das Durchführen der Adsorption und selektiven Desorption mit der im vorangegangenen Schritt abgetrennten Gasfaktion mit bevorzugt hohem ³He/⁴He Verhältnis und bevorzugt großer Gasmenge kann mehrfach wiederholt werden, so dass ³He gegenüber ⁴He weiter angereichert und gewonnen wird.

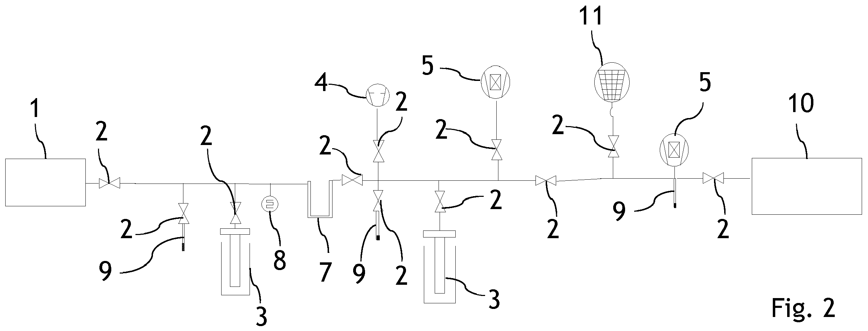

Fig. 2 zeigt eine skizzierte Darstellung einer weiteren Anlage, in der ein Verfahren gemäß einer zweiten Ausführungsform ausgeführt wird. Die in Fig. 2 gezeigte weitere Anlage entspricht der in Fig. 1 gezeigten Anlage mit dem Unterschied, dass sie, anstelle des mit Aktivkohle bestückten Kühlkopfes, eine Ionengetterpumpe 11 aufweist. Der Ionengetter weist ein Metall wie Titan auf. Das Verfahren gemäß der zweiten Ausführungsform umfasst die Adsorption eines ³He/⁴He-haltigen Gases an ein Adsorptionsmittel und die selektive Desorption, so dass ³He von dem Adsorptionsmittel freigesetzt wird, wobei das Durchführen der Adsorption mittels eines Ionisierens und Einschießens des ³He/⁴He-haltigen Gases in einen Ionengetter als Adsorptionsmittel bei einer Temperatur ausgeführt wird, die z.B. Raumtemperatur ist. Die selektive Desorption wird durch ein stufenweises Aufheizen des Adsorptionsmittels, d.h. des Ionengetters, auf eine Temperatur von z.B. 600 K realisiert. Die mittels der Desorption freigesetzte ³He-angereicherte Gasfraktion wird in ein abgetrenntes Reservoir überführt. Das Durchführen der Adsorption und selektiven Desorption mit der im vorangegangenen Schritt abgetrennten Gasfaktion mit dem höchsten ³He/⁴He-Verhältnis kann mehrfach wiederholt werden, so dass ³He weiter abgetrennt und gegenüber ⁴He angereichert und gewonnen wird.

### Beispiel

Eine einstufige Testreihe unter Verwendung eines von Fremdgasen befreiten natürlichen Gases in Form eines Gases mit einem ³He/⁴He-Verhältnis von (21,66 ± 0,24) x 10⁻⁶, was einem typischen Wert bei einem aus Hot-Spot-Vulkanismus resultierenden Gas entspricht, wurde durchgeführt.

Zuerst wurde eine Adsorption des ³He/⁴He-haltigen Gases an einem Adsorptionsmittel in Form von Aktivkohle durchgeführt. Das Durchführen der Adsorption mit Aktivkohle als dem Adsorptionsmittel kann z.B. in dem in Fig. 1 gezeigten mit Aktivkohle bestückten Kühlkopf bei einer Temperatur von 11 K ausgeführt werden, so dass keine gasförmige Phase zurückbleibt. Im Anschluss an die Adsorption wird eine selektive Desorption ausgeführt, so dass ³He von dem Adsorptionsmittel freigesetzt wird. Die selektive Desorption wird durch stufenweises Aufheizen des Adsorptionsmittels, d.h. der Aktivkohle, von der Temperatur von 11 K auf eine Temperatur von z.B. 20 K realisiert. Das stufenweise Aufheizen kann z.B. in 5 K-Schritten ausgeführt werden. Bei diesen Bedingungen bleibt Ne an dem Adsorptionsmittel adsorbiert. Mittels des in Fig. 1 gezeigten Massenspektrometers kann ein ³He/⁴He-Verhältnis kontinuierlich gemessen werden. Die Messung der Helium-Isotope fand in einem 90°-Sektorfeld-Massenspektrometer VG5400 der Firma Vacuum Generators Instruments, heute Thermo Fisher Scientific (Waltham, USA) statt. In Tabelle 1 sind ⁴He-Signale und gemessene ³He/⁴He-Verhältnisse mit 2sigma-Fehler der desorbierten Gasphase bei verschiedenen Temperaturen dargestellt:

| Temperatur (K) | He (Volt) | ³He/⁴He (10⁻⁶) |
|---|---|---|
| 15 | 0,001278 | 34± 14 |
| 20 | 0,076970 | 34,5 ± 1,3 |
| 25 | 0,97230 | 24,82 ± 0,52 |
| 30 | 0,86159 | 17,71 ± 0,40 |
| 35 | 0,115312 | 15,98 ± 0,67 |
| 40 | 0,008314 | 16,6 ± 3,2 |

Insbesondere bei einer Temperatur von 20 K ist ³He gegenüber ⁴He um das 1,5-fache angereichert worden. Insbesondere die bei 20 K ³He-angereicherte Gasfraktion wurde in ein abgetrenntes Reservoir überführt. Durch Optimierung der Schrittweite und mehrstufige Isotopentrennung, d.h. Wiederholen der Adsorption und der selektiven Desorption der im vorangegangenen Schritt abgetrennten Gasfraktion mit bevorzugt hohem ³He/⁴He Verhältnis und bevorzugt großer Gasmenge, kann eine weitere Anreicherung an ³He erzielt werden.

### Bezugszeichenliste:

- 1: Gaseinlass
- 2: Ventil
- 3: Getter
- 4: SAES-Pumpe
- 5: weitere SAES-Pumpe
- 6: mit Aktivkohle bestückter Kühlkopf
- 7: Kühlfalle
- 8: Pirani-Messzweig
- 9: Aktivkohle-Falle
- 10: Massenspektrometer
- 11: Ionengetterpumpe

## Patentansprüche

1. Verfahren zur Abtrennung, Anreicherung und Gewinnung des Isotops ³He gegenüber dem Isotop ⁴He, aufweisend folgende Schritte:
a) Durchführen einer Adsorption eines ³He/⁴He-haltigen Gases an ein Adsorptionsmittel, und
b) Durchführen einer selektiven Desorption, so dass ³He von dem Adsorptionsmittel freigesetzt wird.

2. Verfahren nach Anspruch 1, **dadurch gekennzeichnet, dass** der Schritt a) ein Durchführen der Adsorption mit Aktivkohle als dem Adsorptionsmittel bei einer Temperatur im Bereich von 5 K bis 12 K, bevorzugt im Bereich von 7 K bis 11 K, bevorzugter bei einer Temperatur von 11 K aufweist.

3. Verfahren nach Anspruch 1 oder 2, **dadurch gekennzeichnet, dass** der Schritt a) derart durchgeführt wird, dass keine gasförmige Phase zurückbleibt.

4. Verfahren nach einem der vorangehenden Ansprüche, **dadurch gekennzeichnet, dass** der Schritt b) ein stufenweises Aufheizen des Adsorptionsmittels von einer Temperatur im Bereich von 5 K bis 12 K, bevorzugt 7 bis 11 K, bevorzugter 11 K, zu einer Temperatur im Bereich von 13 K bis 40 K, bevorzugt 15 K bis 25 K, bevorzugter 18 K bis 21 K aufweist.

5. Verfahren nach Anspruch 1, **dadurch gekennzeichnet, dass** der Schritt a) ein Ionisieren und Einschießen des ³He/⁴He-haltigen Gases in einen Ionengetter als dem Adsorptionsmittel bei einer Temperatur im Bereich 280 K bis 315 K, bevorzugt 285 K bis 305 K, bevorzugter 290 K bis 295 K aufweist.

6. Verfahren nach Anspruch 5, **dadurch gekennzeichnet, dass** der Ionengetter ein Metall, bevorzugt Barium, bevorzugter Titan aufweist.

7. Verfahren nach Anspruch 5 oder 6, **dadurch gekennzeichnet, dass** der Schritt b) ein stufenweises Aufheizen des Adsorptionsmittels von einer Temperatur bis zu einem Bereich von 500 K bis 700 K, bevorzugt 550 K bis 650 K, bevorzugter 575 K bis 625 K aufweist.

8. Verfahren nach einem der vorangehenden Ansprüche, **gekennzeichnet durch** einen Schritt c) Überführen des in dem Schritt b) freigesetzten ³He in ein abgetrenntes Reservoir.

9. Verfahren nach einem der vorangehenden Ansprüche, **dadurch gekennzeichnet, dass** die Schritte a) und b) und, wenn rückbezogen auf Anspruch 8, Schritt c) mehrfach wiederholt werden.

10. Verfahren nach einem der vorangehenden Ansprüche, **dadurch gekennzeichnet, dass** das nach dem Schritt b) erhaltene ³He/⁴He-haltige Gasgemisch eine mindestens 1,2-fache, bevorzugt mindestens 1,5-fache Anreicherung an ³He gegenüber dem in dem Schritt a) eingesetzten ³He/⁴He-haltigen Gasgemisch aufweist.

11. Verfahren nach einem der vorangehenden Ansprüche, **dadurch gekennzeichnet, dass** in dem Schritt b) das ³He/⁴He-Verhältnis in der Gasphase mittels eines Massenspektrometers (10) kontinuierlich gemessen wird.

12. Verwendung des mittels des Verfahrens nach einem der vorangehenden Ansprüche erhaltenen abgetrennten, angereicherten und gewonnenen Isotops ³He zur Erzeugung von einer Temperatur im Bereich von 0,01 bis 0,05 K, bevorzugt von 0,02 K, oder als Kontrastmittel für kernspintomografische Aufnahmen.
